(19) Europäisches Patentamt
European Patent Office
Office européen des brevets

(11) **EP 4 666 917 A1**

(12) **EUROPEAN PATENT APPLICATION**
published in accordance with Art. 153(4) EPC

(43) Date of publication:
**24.12.2025   Bulletin 2025/52**

(21) Application number: **24756253.1**

(22) Date of filing: **07.02.2024**

(51) International Patent Classification (IPC):
**A47J 42/44** *(2006.01)*       **A47J 42/38** *(2006.01)*

(52) Cooperative Patent Classification (CPC):
**A47J 42/38; A47J 42/44**

(86) International application number:
**PCT/CN2024/076714**

(87) International publication number:
**WO 2024/169880 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **17.02.2023   CN 202310146679**

(71) Applicant: **Maxi (Beijing) International Brand
Management
Co., Ltd.
Beijing 100081 (CN)**

(72) Inventors:
• **CHEN, Yu**
 **Beijing 100081 (CN)**
• **NG, Kwok Yui Lawrence**
 **Beijing 100081 (CN)**

(74) Representative: **Ponti & Partners, S.L.P
Edifici PRISMA
Av. Diagonal núm. 611-613, Planta 2
08028 Barcelona (ES)**

(54) **BEAN GRINDING METHOD AND APPARATUS, ELECTRONIC DEVICE, AND STORAGE MEDIUM**

(57)    The present application provides a bean grinding method and apparatus, an electronic device, and a storage medium. The bean grinding method comprises: according to a first bean grinding rate, determining a bean grinding duration corresponding to a second bean grinding rate; when the bean grinding rate of a bean grinding machine reaches the first bean grinding rate, according to the first bean grinding rate, the total ground powder weight, and a pipe residual powder weight and a kinetic energy residual powder weight corresponding to the second bean grinding rate, determining whether to start bean grinding at the second bean grinding rate under the current ground powder weight of a weighing sensor; if yes, carrying out bean grinding at the second bean grinding rate, and sending a stop signal to a motor after the bean grinding duration; otherwise, continuing to carry out bean grinding at the first bean grinding rate, and going back to determine whether to start bean grinding at the second bean grinding rate under the current ground powder weight of the weighing sensor so as to continue execution. According to the method of the present application, the bean grinding machine can carry out bean grinding, and the actual ground powder weight of the bean grinding machine is equal to the total ground powder weight required by a user.

Figure 1

## Description

### CROSS REFERENCE TO RELATED APPLICATION

The present application claims the priority to the Chinese patent application with the filing No. 2023101466794 filed with the Chinese Patent Office on February 17, 2023, and entitled "BEAN GRINDING METHOD AND APPARATUS, ELECTRONIC DEVICE, AND STORAGE MEDIUM", which is incorporated herein by reference in entirety.

### TECHNICAL FIELD

The present application relates to a technical field of bean grinding machines, and more specifically, to a bean grinding method and apparatus, electronic device, and storage medium.

### BACKGROUND

With improved living standards, bean grinding machines are becoming increasingly widely used. Bean grinding machines can be used to grind granular foods like coffee beans and soybeans into powder. To meet user demands for a weight of powder ground by the bean grinding machine, a weighing sensor is provided below the powder container for holding powder in the bean grinding machine. When a weighing value of the weighing sensor reaches the ground powder weight required by a user, the CPU sends a stop signal to a motor of the bean grinding machine, causing the bean grinding machine to stop grinding.

However, when the weighing value of the weighing sensor reaches the ground powder weight required by the user, a residual powder in a powder collection pipe of the bean grinding machine does not fall into the powder container, the motor does not stop immediately after receiving the stop signal, and it continues to grind by the residual kinetic energy, causing the actual ground powder weight of the bean grinding machine to exceed the ground powder weight required by the user.

### SUMMARY

In view of this, the purpose of the present application is to provide a bean grinding method and apparatus, electronic device, and storage medium, which can enable a bean grinding machine to grind beans, and the actual ground powder weight of the bean grinding machine is equal to the total ground powder weight required by the user.

In a first aspect, embodiments of the present application provide a bean grinding method, including:

acquiring a first grinding rate and a total ground powder weight set by a user;
determining, according to the first grinding rate a grinding duration corresponding to a second grinding rate; the second grinding rate is a preset known grinding rate corresponding to a pipe residual powder weight and a kinetic energy residual powder weight;

judging, when a grinding rate of a bean grinding machine reaches the first grinding rate, whether to start grinding at the second grinding rate under a current ground powder weight of a weighing sensor according to the first grinding rate, the total ground powder weight, and the pipe residual powder weight and the kinetic energy residual powder weight corresponding to the second grinding rate; and

grinding at the second grinding rate if grinding is to be started at the second grinding rate, and sending a stop signal to a motor after the grinding duration; otherwise, continuing grinding at the first grinding rate, and going back to judging whether to start grinding at the second grinding rate under a current ground powder weight of a weighing sensor to proceed.

In one possible embodiment, judging whether to start grinding at the second grinding rate under a current ground powder weight of a weighing sensor includes:

determining a target ground powder weight according to the first grinding rate, the total ground powder weight, and the pipe residual powder weight and the kinetic energy residual powder weight; and
judging whether to start grinding at the second grinding rate by comparing the target ground powder weight with a current ground powder weight.

In one possible embodiment, judging whether to start grinding at the second grinding rate includes:
starting grinding at the second grinding rate if the target ground powder weight is the same as the current ground powder weight.

In one possible embodiment, determining a target ground powder weight includes:

determining an initial ground powder weight after grinding at the first grinding rate for a preset duration;
calculating a sum of the initial ground powder weight, the pipe residual powder weight, and the kinetic energy residual powder weight; and
subtracting the sum from the total ground powder weight to obtain the target ground powder weight.

In one possible embodiment, determining a grinding duration corresponding to a second grinding rate includes:

determining a difference between the first grinding rate and the second grinding rate; and
determining the grinding duration according to the difference and the second grinding rate.

In one possible embodiment, before judging a grinding duration corresponding to a second grinding rate, the bean grinding method further comprises:

judging whether the first grinding rate and the second grinding rate are the same;
setting the grinding duration to zero and going back to judging whether to start grinding at the second grinding rate under a current ground powder weight of a weighing sensor to proceed, if the first grinding rate and the second grinding rate are the same; and
going back to determining a grinding duration corresponding to a second grinding rate to proceed, if the first grinding rate and the second grinding rate are different.

In a second aspect, embodiments of the present application further provide a bean grinding apparatus, including:

an acquisition module, configured to acquire a first grinding rate and a total ground powder weight set by a user;
a determination module, configured to determine, according to the first grinding rate, a grinding duration corresponding to a second grinding rate; the second grinding rate is a preset known grinding rate corresponding to a pipe residual powder weight and a kinetic energy residual powder weight;
a judgment module, configured to judge, when a grinding rate of a bean grinding machine reaches the first grinding rate, whether to start grinding at the second grinding rate under a current ground powder weight of a weighing sensor according to the first grinding rate, the total ground powder weight, and the pipe residual powder weight and the kinetic energy residual powder weight corresponding to the second grinding rate; and
a grinding module, configured to grind at the second grinding rate, if grinding is to be started at the second grinding rate;
a sending module, configured to send a stop signal to a motor after the grinding duration;
a jumping module, configured to otherwise continue grinding at the first grinding rate, and go back to judging whether to start grinding at the second grinding rate under a current ground powder weight of a weighing sensor to proceed.

In one possible embodiment, the judgment module is specifically configured to: determine a target ground powder weight according to the first grinding rate, the total ground powder weight, and the pipe residual powder weight and the kinetic energy residual powder weight; and judge whether to start grinding at the second grinding rate by comparing the target ground powder weight with a current ground powder weight.

In one possible embodiment, the judgment module is further configured to start grinding at the second grinding rate if the target ground powder weight is the same as the current ground powder weight.

In one possible embodiment, the judgment module is further configured to:

determine the initial ground powder weight after grinding at the first grinding rate for a preset duration;
calculate a sum of the initial ground powder weight, the pipe residual powder weight, and the kinetic energy residual powder weight; and
subtract the sum from the total ground powder weight to obtain the target ground powder weight.

In one possible embodiment, the determination module is specifically configured to determine a difference between the first grinding rate and the second grinding rate; and determine the grinding duration according to the difference and the second grinding rate.

In one possible embodiment, the bean grinding apparatus further includes: a setting module;

a judgment module, further configured to judge whether the first grinding rate and the second grinding rate are the same;
a setting module, configured to set the grinding duration to zero if the first grinding rate and the second grinding rate are the same;
a jumping module, further configured to go back to judging whether to start grinding at the second grinding rate under the current ground powder weight of the weighing sensor to proceed;
the jumping module is further configured to go back to determine the grinding duration corresponding to the second grinding rate to proceed, if the first grinding rate and the second grinding rate are different.

In a third aspect, embodiments of the present application further provide an electronic device including: a processor, a storage medium, and a bus, wherein the storage medium stores machine-readable instructions executable by the processor; and when the electronic device is in operation, the processor and the storage medium communicate via the bus, and the processor executes the machine-readable instructions to perform the steps of any of the bean grinding methods according to the first aspect.

In a fourth aspect, embodiments of the present application further provide a computer-readable storage medium, storing a computer program thereon, wherein the computer program, when executed by a processor, performs the steps of any of the bean grinding methods according to the first aspect.

Embodiments of the present application provide a bean grinding method and apparatus, electronic device, and storage medium. The bean grinding method includes: acquiring a first grinding rate and a total ground powder weight set by a user; determining a grinding duration corresponding to a second grinding rate according to the first grinding rate; the second grinding rate is a preset known grinding rate corresponding to a pipe residual powder weight and a kinetic energy residual powder weight; when a grinding rate of a bean grinding machine reaches the first grinding rate, judging whether to start grinding at the second grinding rate under a current ground powder weight of a weighing sensor according to the first grinding rate, the total ground powder weight, and the pipe residual powder weight and the kinetic energy residual powder weight corresponding to the second grinding rate; if grinding is to be started at the second grinding rate, grinding at the second grinding rate, and sending a stop signal to a motor after the grinding duration; otherwise, continuing t grinding at the first grinding rate, and going back to determining whether to start grinding at the second grinding rate under the current ground powder weight of the weighing sensor to proceed. In the present application, when the grinding rate of the bean grinding machine reaches the first grinding rate, it is judged that whether to start grinding at the second grinding rate under the current ground powder weight of the weighing sensor; if grinding is to be started at the second grinding rate, grinding is performed at the second grinding rate, and the stop signal is sent to the motor after the grinding duration; otherwise, it continues to determine whether to start grinding at the second grinding rate. The present application enables the bean grinding machine to grind beans, and the actual ground powder weight of the bean grinding machine is equal to the total ground powder weight required by the user.

## BRIEF DESCRIPTION OF DRAWINGS

To more clearly illustrate the technical solutions of the embodiments of the present application, the following briefly describes the drawings used in these embodiments. It should be understood that the following drawings illustrate only certain embodiments of the present application and should not be construed as limiting the scope of the present application. For those ordinarily skilled in the art, other related drawings can be obtained based on these drawings without creative work.

Figure 1 shows a flow chart of a bean grinding method provided in an embodiment of the present application;
Figure 2 shows a flow chart of another bean grinding method provided in an embodiment of the present application;
Figure 3 shows a schematic structural diagram of a bean grinding apparatus provided in an embodiment of the present application; and
Figure 4 shows a schematic structural diagram of an electronic device provided in an embodiment of the present application.

## DETAILED DESCRIPTION OF EMBODIMENTS

To further clarify the objectives, technical solutions, and advantages of the embodiments of the present application, the technical solutions in the embodiments of the present application will be described clearly and completely in combination with the drawings in the embodiments of the present application below. It should be understood that the drawings in the present application are for illustrative and descriptive purposes only and are not intended to limit the scope of protection of the present application. Furthermore, it should be understood that the schematic drawings are not drawn to scale. The flowcharts used in the present application illustrate operations implemented according to some embodiments of the present application. It should be understood that the operations in the flowcharts may be implemented out of sequence, and steps that do not have a logical contextual relationship may be reversed or performed simultaneously. Furthermore, those skilled in the art, guided by the contents of the present application, may add one or more additional operations to the flowcharts or remove one or more operations from the flowcharts.

In addition, the described embodiments are merely some of, and not all of the embodiments of the present application. The components of the embodiments of the present application, generally described and illustrated in the drawings herein, may be arranged and designed in a variety of different configurations. Therefore, the following detailed description of the embodiments of the present application, as provided in the drawings, is not intended to limit the claimed scope of the application, but rather merely represents selected embodiments of the present application. All other embodiments derived by those skilled in the art based on the embodiments of the present application without inventive effort are within the scope of protection of the present application.

To enable those skilled in the art to utilize the present application, the following embodiments are provided in combination with the specific application scenario of "bean grinding machine technical field". Those skilled in the art will appreciate that the general principles defined herein can be applied to other embodiments and disclosure scenarios without departing from the spirit and scope of the present application. Although the present application primarily focuses on the "bean grinding machine technical field", it should be understood that this is merely an exemplary embodiment.

It should be noted that the term "including" is used in the embodiments of the present application to indicate the presence of subsequently stated features, but does not preclude the addition of other features.

The following describes in detail a bean grinding method provided in an embodiment of the present application.

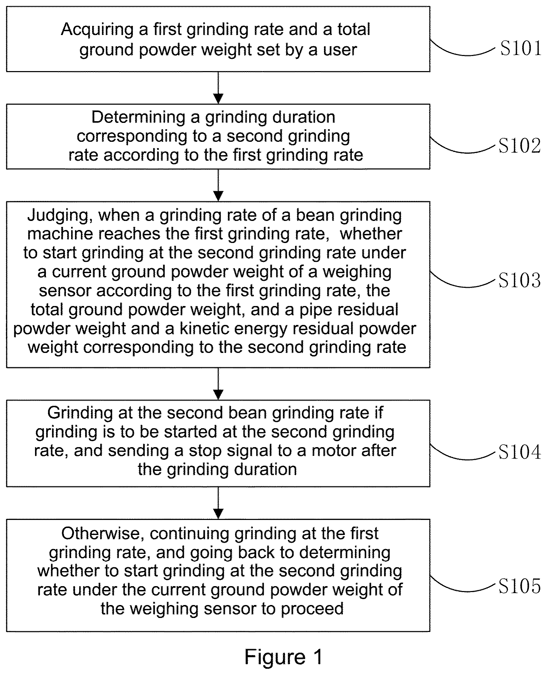

Figure 1 shows a flow chart of a bean grinding method provided in an embodiment of the present application. The specific execution process of this bean grinding method is as follows.

S101. acquiring a first grinding rate and a total ground powder weight set by a user.

S102. determining a grinding duration corresponding to a second grinding rate according to the first grinding rate.

S103. when a grinding rate of a bean grinding machine reaches the first grinding rate, judging whether to start grinding at the second grinding rate under a current ground powder weight of a weighing sensor according to the first grinding rate, the total ground powder weight, and the pipe residual powder weight and the kinetic energy residual powder weight corresponding to the second grinding rate.

S104. if bean grinding at the second grinding rate is to be started, grinding at the second grinding rate, and sending a stop signal to a motor after the grinding duration.

S105. otherwise, continuing grinding at the first grinding rate, and going back to judging whether to start grinding at the second grinding rate under the current ground powder weight of the weighing sensor so as to continue execution.

Embodiments of the present application provide a bean grinding method and apparatus, an electronic device, and a storage medium. The bean grinding method includes: acquiring a first grinding rate and a total ground powder weight set by a user; determining a grinding duration corresponding to a second grinding rate according to the first grinding rate; the second grinding rate is a preset known grinding rate corresponding to a pipe residual powder weight and a kinetic energy residual powder weight; when a grinding rate of a bean grinding machine reaches the first grinding rate, judging whether to start grinding at the second grinding rate under a current ground powder weight of a weighing sensor according to the first grinding rate, the total ground powder weight, and the pipe residual powder weight and the kinetic energy residual powder weight corresponding to the second grinding rate; if bean grinding at the second grinding rate is to be started, carrying out bean grinding at the second grinding rate, and sending a stop signal to a motor after the grinding duration; otherwise, continuing grinding at the first grinding rate, and going back to judging whether to start grinding at the second grinding rate under the current ground powder weight of the weighing sensor so as to continue execution. In the present application, when the grinding rate of the bean grinding machine reaches the first grinding rate, judging whether to start grinding at the second grinding rate under the current ground powder weight of the weighing sensor; if bean grinding at the second grinding rate is to be started, grinding at the second grinding rate, and sending the stop signal to the motor after the grinding duration; otherwise, continuing to judge whether to start grinding at the second grinding rate. The present application enables the bean grinding machine to grind beans, and the actual ground powder weight of the bean grinding machine is equal to the total ground powder weight required by the user.

The following describes the exemplary steps of an embodiment of the present application.

S101. acquiring a first grinding rate and a total ground powder weight set by a user.

In this embodiment of the present application, the first grinding rate is a grinding rate for the bean grinding machine set by the user. The total ground powder weight is a weight of the powder that needs to be ground by the bean grinding machine set by the user.

Here, the powder ground by the motor of the bean grinding machine after bean grinding first enters a powder collection pipe from one end of the powder collection pipe, then flows out of the other end of the powder collection pipe and falls into a powder container. In addition, a weighing sensor is provided below a powder collection container for weighing the powder in the powder container.

S102. determining a grinding duration corresponding to a second grinding rate according to the first grinding rate.

In this embodiment of the present application, the second grinding rate is a second grinding rate preset by a technician. The pipe residual powder weight refers to a weight of powder that has been ground by the motor but has not yet fallen into the powder container when bean grinding continues at the second grinding rate. The kinetic energy residual powder weight refers to a weight of powder that continues to be ground due to the kinetic energy generated by the current motor speed after the motor is sent a signal to stop bean grinding when bean grinding at the second grinding rate. The grinding duration specifies a duration of bean grinding at the second grinding rate during the current grinding process.

Here, if the pipe residual powder weight and the kinetic energy residual powder weight of the bean grinding machine are known at this time when the stop signal is finally sent to the motor, the final actual ground powder weight of the bean grinding machine can be guaranteed to be equal to the total ground powder weight preset by the user. Therefore, the second grinding rate must be a known grinding rate that already clearly corresponds to the pipe residual powder weight and the kinetic energy residual powder weight.

Specifically, determining a difference between the first grinding rate and the second grinding rate.

In this embodiment of the present application, the second grinding rate is subtracted from the first grinding rate to obtain the difference between the first grinding rate and the second grinding rate.

Specifically, determining the grinding duration according to this difference and the second grinding rate.

In this embodiment of the present application, it takes time from sending a signal to the motor until the motor executes the signal content, so we preset a preset duration in advance. If bean grinding continues at the first grinding rate, a stop signal should be sent to the motor after the preset duration so that final actual ground powder weight of the bean grinding machine equals the total ground powder weight preset by the user. However, in order to send the stop signal to the motor, the pipe residual powder weight and the kinetic energy residual powder weight of the bean grinding machine are known at this time, so bean grinding is carried out at the second grinding rate instead. However, due to the speed difference between the first grinding rate and the second grinding rate, the weight of the powder ground by each grinding rate within the same duration is different. Therefore, it is necessary to calculate the grinding duration required at the second grinding rate to ensure the same weight of powder is ground within the preset duration after switching from the first grinding rate to the second grinding rate. As can be seen from the above, the weight of powder ground by grinding at the first grinding rate for the preset duration is the same as the weight of powder ground by grinding at the second grinding rate for the same grinding duration.

Furthermore, a product of the difference and the preset duration is first calculated to obtain the weight difference between the powder ground corresponding to the first grinding rate and the second grinding rate within the preset duration. The ratio of this product to the second grinding rate is then calculated. This ratio represents the duration required for the bean grinding machine to grind the same weight of powder as the weight difference if bean grinding is carried out at the second grinding rate. Finally, the sum of this ratio and the preset duration is calculated to obtain the duration that the bean grinding machine grinds beans at the second grinding rate.

Optionally, the calculation process of the grinding duration can also be expressed using the following formula:

$$T = (At\_0)/V\_2 + t\_0;$$

where, T is the grinding duration, A is the difference between the first grinding rate and the second grinding rate, t_0 is the preset duration, and V_2 is the second grinding rate.

S103. when a grinding rate of a bean grinding machine reaches the first grinding rate, judging whether to start grinding at the second grinding rate under a current ground powder weight of a weighing sensor according to the first grinding rate, the total ground powder weight, and a pipe residual powder weight and a kinetic energy residual powder weight corresponding to the second grinding rate.

It is juedged whether to start grinding at the second grinding rate under a current ground powder weight of a weighing sensor by the following steps.

I. determining a target ground powder weight according to the first grinding rate, the total ground powder weight, and the pipe residual powder weight and the kinetic energy residual powder weight.

In this embodiment of the present application, the target ground powder weight represents a value of the weighing sensor when the bean grinding machine starts grinding at the second grinding rate. That is, when the weight of the powder container is equal to the target ground powder weight, the bean grinding machine starts bean grinding at the second grinding rate.

Specifically, the method for determining the target ground powder weight includes: determining an initial ground powder weight after grinding at the first grinding rate for a preset duration; calculating a sum of the initial ground powder weight, the pipe residual powder weight, and the kinetic energy residual powder weight; and subtracting the sum from the total ground powder weight to obtain the target ground powder weight.

In this embodiment of the present application, the initial ground powder weight is determined by multiplying the first grinding rate by the preset duration.

Here, the sum of the initial ground powder weight, the pipe residual powder weight, and the kinetic energy residual powder weight is the sum of the ground powder weight of the bean grinding machine grinding at the second grinding rate for the preset duration, the weight of the powder that has been ground but has not yet fallen into the powder container after the stop signal is sent to the motor, and the weight of the powder that continues to be ground due to the kinetic energy generated by the current motor speed. Subtract the sum from the total ground powder weight to obtain the value of the weighing sensor when the bean grinding machine starts grinding at the second grinding rate.

II. judging whether to start grinding at the second grinding rate by comparing the target ground powder weight with a current ground powder weight.

In this embodiment of the present application, the current ground powder weight is the value of the weighing sensor. The value of the weighing sensor represents the weight of the powder in the powder container.

Specifically, if the target ground powder weight is the same as the current ground powder weight, then starting grinding at the second grinding rate.

S104. if grinding at the second grinding rate is to be started, carrying out grinding at the second grinding rate, and sending a stop signal to a motor after the grinding duration.

S105. otherwise, continuing grinding at the first grinding rate, and going back to judging whether to start grinding at the second grinding rate under the current ground powder weight of the weighing sensor so as to continue execution.

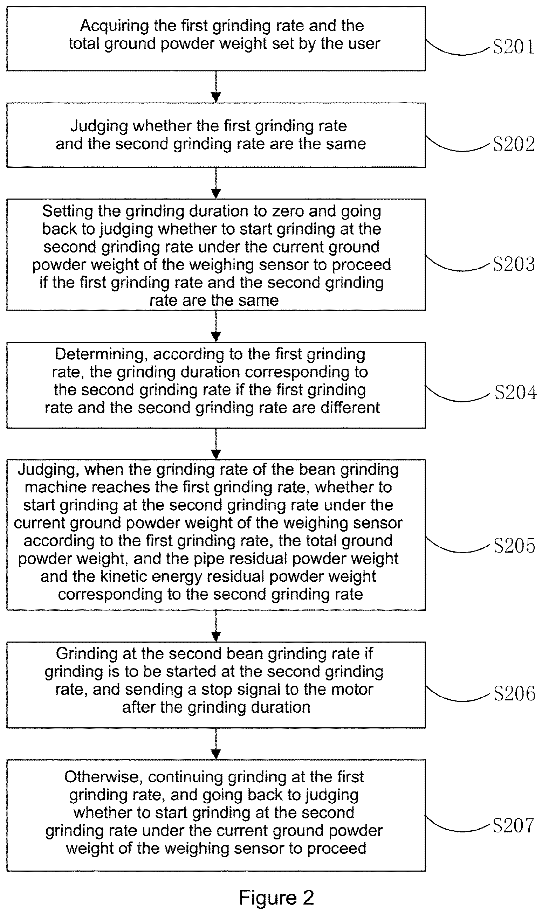

Figure 2 is a flow chart illustrating a bean grinding method provided an embodiment of the present application. The similarities between steps S201 to S207 and steps S101 to S105 refer to steps S101 to S105, and their descriptions are omitted. The following describes the exemplary steps of the embodiment of the present application.

S201. acquiring the first grinding rate and the total ground powder weight set by the user.

S202. judging whether the first grinding rate and the second grinding rate are the same.

S203. if the first grinding rate and the second grinding rate are the same, setting the grinding duration to zero and going back to judging whether to start grinding at the second grinding rate under the current ground powder weight of the weighing sensor so as to continue execution.

In this embodiment of the present application, if the first grinding rate and the second grinding rate are the same, there is no speed difference between the first grinding rate and the second grinding rate. Therefore, there is no need to consider the duration required to switch from the first grinding rate to the second grinding rate, nor is there any need to calculate the grinding duration for the second grinding rate. The grinding duration is simply set to zero.

S204. if the first grinding rate and the second grinding rate are different, determining the grinding duration corresponding to the second grinding rate according to the first grinding rate.

S205. when the grinding rate of the bean grinding machine reaches the first grinding rate, judging whether to start grinding at the second grinding rate under the current ground powder weight of the weighing sensor according to the first grinding rate, the total ground powder weight, and the pipe residual powder weight and the kinetic energy residual powder weight corresponding to the second grinding rate.

S206. if grinding at the second grinding rate is to be started, carrying out grinding at the second grinding rate, and sending a stop signal to the motor after the grinding duration.

S207. otherwise, continuing grinding at the first grinding rate, and going back to judging whether to start grinding at the second grinding rate under the current ground powder weight of the weighing sensor so as to continue execution.

The embodiment of the present application provides a bean grinding method. The bean grinding method includes: acquiring a first grinding rate and a total ground powder weight set by a user; judging whether the first grinding rate and the second grinding rate are the same; if the first grinding rate and the second grinding rate are the same, setting the grinding duration to zero and going back to judging whether to start grinding at the second grinding rate under the current ground powder weight of the weighing sensor so as to continue execution; if the first grinding rate and the second grinding rate are different, determining the grinding duration corresponding to the second grinding rate according to the first grinding rate; the second grinding rate is a preset known grinding rate that corresponds to the pipe residual powder weight

and the kinetic energy residual powder weight; when the grinding rate of the bean grinding machine reaches the first grinding rate, judging whether to start grinding at the second grinding rate under the current ground powder weight of the weighing sensor according to the first grinding rate, the total ground powder weight, and the pipe residual powder weight and the kinetic energy residual powder weight corresponding to the second grinding rate; if grinding at the second grinding rate is to be started, carrying out grinding at the second grinding rate, and sending a stop signal to the motor after the grinding duration; otherwise, continuing grinding at the first grinding rate, and going back to judging whether to start grinding at the second grinding rate under the current ground powder weight of the weighing sensor so as to continue execution. The present application determines different grinding methods by judging whether the first grinding rate and the second grinding rate are the same. The present application enables the bean grinding machine to grind bean, and the actual ground powder weight of the bean grinding machine is equal to the total ground powder weight required by the user.

Based on the same inventive concept, the embodiments of the present application also provide a bean grinding apparatus corresponding to the bean grinding method. Since the principles underlying the device in the embodiments of the present application are similar to those of the bean grinding method described above, the implementation of the device can be referred to as the implementation of the method, and any repetitions will be omitted.

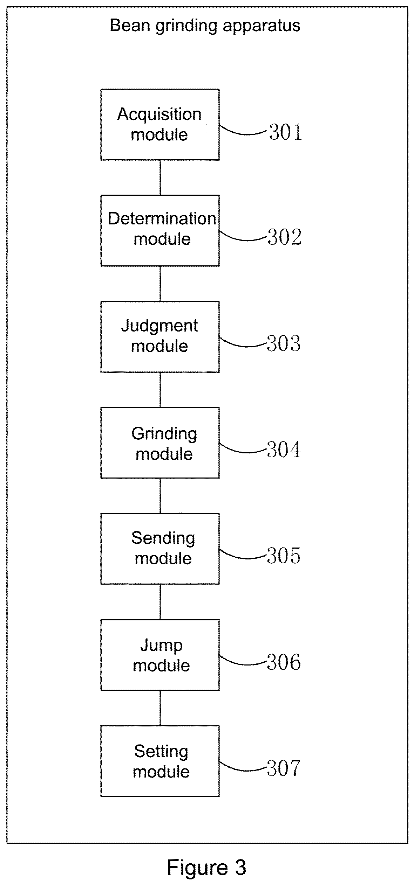

Figure 3 is a schematic diagram of a bean grinding apparatus provided in the embodiments of the present application. The bean grinding apparatus includes:

an acquisition module 301, configured to acquire a first grinding rate and a total ground powder weight set by a user;

a determination module 302, configured to determine a grinding duration corresponding to a second grinding rate according to the first grinding rate; the second grinding rate is a preset known grinding rate that corresponds to a pipe residual powder weight and a kinetic energy residual powder weight;

a judgment module 303, configured to judge, when a grinding rate of a bean grinding machine reaches the first grinding rate, whether to start grinding at the second grinding rate under a current ground powder weight of a weighing sensor according to the first grinding rate, the total ground powder weight, and the pipe residual powder weight and the kinetic energy residual powder weight corresponding to the second grinding rate;

a grinding module 304, configured to carry out, if grinding at the second grinding rate is to be started, grinding at the second grinding rate;

a sending module 305, configured to send a stop signal to a motor after the grinding duration;
jumping module 306, configured to otherwise continue grinding at the first grinding rate, and going back to judging whether to start grinding at the second grinding rate under the current ground powder weight of the weighing sensor so as to continue execution.

In one possible embodiment, the judgment module 303 is specifically configured to determine a target ground powder weight according to the first grinding rate, the total ground powder weight, and the pipe residual powder weight and the kinetic energy residual powder weight; and determine whether to start grinding at the second grinding rate by comparing the target ground powder weight with the current ground powder weight.

In one possible embodiment, the judgment module 303 is further configured to start grinding at the second grinding rate if the target ground powder weight is the same as the current ground powder weight.

In one possible embodiment, the judgment module 303 is further configured to:

determine the initial ground powder weight after grinding at the first grinding rate for a preset duration; calculate a sum of the initial ground powder weight, the pipe residual powder weight, and the kinetic energy residual powder weight; and subtract the sum from the total ground powder weight to obtain the target ground powder weight.

In one possible embodiment, the determination module 302 is specifically configured to determine the difference between the first grinding rate and the second grinding rate; and determine the grinding duration according to the difference and the second grinding rate.

In one possible embodiment, the bean grinding apparatus further includes: a setting module 307.

The judgment module 303 is further configured to determine whether the first grinding rate and the second grinding rate are the same.

The setting module 307 is configured to set the grinding duration to zero if the first grinding rate and the second grinding rate are the same.

The jumping module 306 is further configured to go back to judging whether to start grinding at the second grinding rate under the current ground powder weight of the weighing sensor so as to continue execution.

The jumping module 306 is further configured to, if the first grinding rate and the second grinding rate are different, go back to determining the grinding duration corresponding to the second grinding rate so as to continue execution.

The embodiment of the present application provides a bean grinding apparatus. The bean grinding apparatus includes: an acquisition module 301, configured to obtain a first grinding rate and a total ground powder weight set by a user; a determination module 302, configured to determine a grinding duration corresponding to the second grinding rate according to the first grinding rate; the second grinding rate is a preset known grinding rate that corresponds to a pipe residual powder weight and a kinetic energy residual powder weight; a judgment module 303, configured to judge, when a grinding rate of a bean grinding machine reaches the first grinding rate, whether to start grinding at the second grinding rate under a current ground powder weight of a weighing sensor according to the first grinding rate, the total ground powder weight, and the pipe residual powder weight and the kinetic energy residual powder weight corresponding to the second grinding rate; a grinding module 304, configured to carry out, if grinding at the second grinding rate is to be started, grinding at the second grinding rate; a sending module 305, configured to send a stop signal to a motor after the grinding duration; and jumping module 306, configured to otherwise continue grinding at the first grinding rate, and going back to determine whether to start grinding at the second grinding rate under the current ground powder weight of the weighing sensor so as to continue execution. In the present application, when the grinding rate of the bean grinding machine reaches the first grinding rate, judging whether to start grinding at the second grinding rate under the current ground powder weight of the weighing sensor; if bean grinding at the second grinding rate is to be started, carrying out bean grinding at the second grinding rate and sending the stop signal to the motor after the grinding duration; otherwise continuing to judge whether to start grinding at the second grinding rate. The present application enables the bean grinding machine to grind beans, and the actual ground powder weight of the bean grinding machine is equal to the total ground powder weight required by the user.

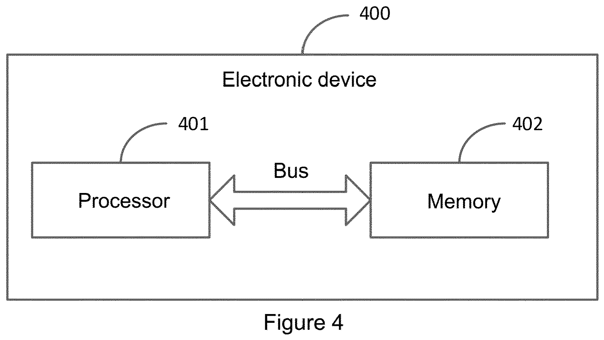

As shown in Figure 4, an embodiment of the present application provides an electronic device 400 including: a processor 401, a memory 402, and a bus. The memory 402 stores machine-readable instructions executable by the processor 401. When the electronic device is in operation, the processor 401 communicates with the memory 402 via the bus, and the processor 401 executes the machine-readable instructions to perform the steps of the bean grinding method described above.

Specifically, the memory 402 and processor 401 can be general-purpose memories and processors, and are not specifically limited herein. When the processor 401 executes a computer program stored in the memory 402, the bean grinding method described above can be performed.

Corresponding to the bean grinding method described above, an embodiment of the present application also provides a computer-readable storage medium, and the computer program is stored on the computer-readable storage medium. When the computer program is executed by the processor, the steps of the bean grinding method described above are performed.

Those skilled in the art will clearly understand that, for ease and brevity of description, the specific operating procedures of the systems and devices described above can refer to the corresponding procedures in the method embodiments and will not be further described in the present application. In the several embodiments provided by the present application, it should be understood that the disclosed systems, devices, and methods can be implemented in other ways. The device embodiments described above are merely illustrative. For example, the module divisions described represent only one logical functional division; actual implementations may employ different divisions. For example, multiple modules or components may be combined or integrated into another system, or some features may be omitted or not implemented. Furthermore, the couplings or direct couplings or communication connections shown or discussed may be through communication interfaces, or indirect couplings or communication connections between devices or modules, and may be electrical, mechanical, or other.

The modules described as separate components may or may not be physically separate, and the components shown as modules may or may not be physical units, i.e., they may be located in a single location or distributed across multiple network units. Some or all of the units may be selected according to actual needs to achieve the purpose of the solution in this embodiment.

In addition, the functional units in the various embodiments of the present application may be integrated into a single processing unit, each unit may exist physically separately, or two or more units may be integrated into a single unit.

If the functions are implemented as software functional units and sold or used as standalone products, they may be stored in a processor-executable non-volatile computer-readable storage medium. Based on this understanding, the essential technical solution of the present application, or the portion that contributes to the prior art, or the portion of the technical solution, can be embodied in the form of a software product. This computer software product, stored on a storage medium, includes instructions for enabling a computer device (such as a personal computer, server, or network device) to perform all or part of the steps of the information processing method described in each embodiment of the present application. The aforementioned storage medium includes various media capable of storing program code, such as a USB flash drive, a mobile hard drive, ROM, RAM, a magnetic disk, or an optical disk.

The above are merely specific embodiments of the present application, but the scope of protection of the present application is not limited thereto. Any modifications or substitutions that can be readily conceived by a person skilled in the art within the technical scope disclosed in the present application are intended to be covered by the scope of protection of the present application. Therefore, the scope of protection of the present application shall be based on the scope of protection of the claims.

**Claims**

1. A bean grinding method, comprising steps of:

   acquiring a first grinding rate and a total ground powder weight set by a user;
   determining, according to the first grinding rate, a grinding duration corresponding to a second grinding rate, wherein the second grinding rate is a preset known grinding rate corresponding to a pipe residual powder weight and a kinetic energy residual powder weight;
   judging, when a grinding rate of a bean grinding machine reaches the first grinding rate, whether to start grinding at the second grinding rate under a current ground powder weight of a weighing sensor according to the first grinding rate, the total ground powder weight, and the pipe residual powder weight and the kinetic energy residual powder weight corresponding to the second grinding rate; and
   grinding at the second grinding rate if grinding is to be started at the second grinding rate, and sending a stop signal to a motor after the grinding duration;
   otherwise, continuing grinding at the first grinding rate, and going back to step of judging whether to start grinding at the second grinding rate under a current ground powder weight of a weighing sensor to proceed.

2. The bean grinding method according to claim 1, wherein the step of judging whether to start grinding at the second grinding rate under a current ground powder weight of a weighing sensor comprises steps of:

   determining a target ground powder weight according to the first grinding rate, the total ground powder weight, and the pipe residual powder weight and the kinetic energy residual powder weight; and
   judging whether to start grinding at the second grinding rate by comparing the target ground powder weight with a current ground powder weight.

3. The bean grinding method according to claim 2, wherein the step of judging whether to start grinding at the second grinding rate comprises:
   starting grinding at the second grinding rate if the target ground powder weight is the same as the current ground powder weight.

**4.** The bean grinding method according to claim 2, wherein the step of determining a target ground powder weight comprises:

> determining an initial ground powder weight after grinding at the first grinding rate for a preset duration;
> calculating a sum of the initial ground powder weight, the pipe residual powder weight, and the kinetic energy residual powder weight; and subtracting the sum from the total ground powder weight to obtain the target ground powder weight.

**5.** The bean grinding method according to claim 1, wherein the step of determining a grinding duration corresponding to a second grinding rate comprises:

> determining a difference between the first grinding rate and the second grinding rate; and
> determining the grinding duration according to the difference and the second grinding rate.

**6.** The bean grinding method according to claim 1, wherein before the step of judging a grinding duration corresponding to a second grinding rate, the bean grinding method further comprises steps of:

> judging whether the first grinding rate and the second grinding rate are the same;
> setting the grinding duration to zero and going back to the step of judging whether to start grinding at the second grinding rate under a current ground powder weight of a weighing sensor to proceed, if the first grinding rate and the second grinding rate are the same; and going back to the step of determining a grinding duration corresponding to a second grinding rate to proceed, if the first grinding rate and the second grinding rate are different.

**7.** A bean grinding apparatus, comprising:

> an acquisition module, configured to acquire a first grinding rate and a total ground powder weight set by a user;
> a determination module, configured to determine, according to the first grinding rate, a grinding duration corresponding to a second grinding rate, wherein the second grinding rate is a preset known grinding rate corresponding to a pipe residual powder weight and a kinetic energy residual powder weight;
> a judgment module, configured to judge, when a grinding rate of a bean grinding machine reaches the first grinding rate, whether to start grinding at the second grinding rate under a current ground powder weight of a weighing sensor according to the first grinding rate, the total ground powder weight, and the pipe residual powder weight and the kinetic energy residual powder weight corresponding to the second grinding rate; and
> a grinding module, configured to grind at the second grinding rate if grinding is to be started at the second grinding rate;
> a sending module, configured to send a stop signal to a motor after the grinding duration;
> a jumping module, configured to otherwise continue grinding at the first grinding rate, and go back to the step of judging whether to start grinding at the second grinding rate under a current ground powder weight of a weighing sensor to proceed.

**8.** The bean grinding apparatus according to claim 7, wherein the judgment module is specifically configured to:

> determine a target ground powder weight according to the first grinding rate, the total ground powder weight, and the pipe residual powder weight and the kinetic energy residual powder weight; and
> judge whether to start grinding at the second grinding rate by comparing the target ground powder weight with a current ground powder weight.

**9.** An electronic device, comprising: a processor, a storage medium, and a bus, wherein the storage medium stores machine-readable instructions executable by the processor; and when the electronic device is in operation, the processor and the storage medium communicate via the bus, and the processor executes the machine-readable instructions to perform the steps of the bean grinding method according to any one of claims 1 to 6.

**10.** A computer-readable storage medium, storing a computer program thereon, wherein the computer program, when executed by a processor, performs the steps of the bean grinding method according to any one of claims 1 to 6.

Acquiring a first grinding rate and a total ground powder weight set by a user ⟋S101

Determining a grinding duration corresponding to a second grinding rate according to the first grinding rate ⟋S102

Judging, when a grinding rate of a bean grinding machine reaches the first grinding rate, whether to start grinding at the second grinding rate under a current ground powder weight of a weighing sensor according to the first grinding rate, the total ground powder weight, and a pipe residual powder weight and a kinetic energy residual powder weight corresponding to the second grinding rate ⟋S103

Grinding at the second bean grinding rate if grinding is to be started at the second grinding rate, and sending a stop signal to a motor after the grinding duration ⟋S104

Otherwise, continuing grinding at the first grinding rate, and going back to determining whether to start grinding at the second grinding rate under the current ground powder weight of the weighing sensor to proceed ⟋S105

Figure 1

Acquiring the first grinding rate and the total ground powder weight set by the user — S201

Judging whether the first grinding rate and the second grinding rate are the same — S202

Setting the grinding duration to zero and going back to judging whether to start grinding at the second grinding rate under the current ground powder weight of the weighing sensor to proceed if the first grinding rate and the second grinding rate are the same — S203

Determining, according to the first grinding rate, the grinding duration corresponding to the second grinding rate if the first grinding rate and the second grinding rate are different — S204

Judging, when the grinding rate of the bean grinding machine reaches the first grinding rate, whether to start grinding at the second grinding rate under the current ground powder weight of the weighing sensor according to the first grinding rate, the total ground powder weight, and the pipe residual powder weight and the kinetic energy residual powder weight corresponding to the second grinding rate — S205

Grinding at the second bean grinding rate if grinding is to be started at the second grinding rate, and sending a stop signal to the motor after the grinding duration — S206

Otherwise, continuing grinding at the first grinding rate, and going back to judging whether to start grinding at the second grinding rate under the current ground powder weight of the weighing sensor to proceed — S207

Figure 2

Figure 3

400

## Electronic device

401

### Processor

Bus

402

### Memory

Figure 4

## INTERNATIONAL SEARCH REPORT

| International application No. |
|---|
| **PCT/CN2024/076714** |

### A. CLASSIFICATION OF SUBJECT MATTER

A47J42/44(2006.01)i; A47J42/38(2006.01)i

According to International Patent Classification (IPC) or to both national classification and IPC

### B. FIELDS SEARCHED

Minimum documentation searched (classification system followed by classification symbols)

IPC:A47J

Documentation searched other than minimum documentation to the extent that such documents are included in the fields searched

Electronic data base consulted during the international search (name of data base and, where practicable, search terms used)

CNABS: CNTXT; CNKI; VEN; WOTXT; EPTXT; USTXT: 玛西, 陈豫, 吴国锐, 磨豆, 研磨, 磨粉, 速率, 速度, 管道, 通道, 导管, 余粉, 残余, 残留, 粉, 称重, 重量, bean, mill+, grind+, velocity, speed, pipe, conduit, weigh+

### C. DOCUMENTS CONSIDERED TO BE RELEVANT

| Category* | Citation of document, with indication, where appropriate, of the relevant passages | Relevant to claim No. |
|---|---|---|
| PX | CN 116019371 A (MAXI (BEIJING) INTERNATIONAL BRAND MANAGEMENT CO., LTD.) 28 April 2023 (2023-04-28)<br>description, paragraphs [0004]-[0130], and figures 1-4 | 1-10 |
| A | CN 113056221 A (DRM S.R.L) 29 June 2021 (2021-06-29)<br>description, paragraphs [0041]-[0085], and figures 1-9 | 1-10 |
| A | CN 110301838 A (DENGHUI ELECTRICAL APPLIANCE (HUIZHOU) CO., LTD.) 08 October 2019 (2019-10-08)<br>entire document | 1-10 |
| A | CN 113811233 A (LA MARZOCCO S.R.L.) 17 December 2021 (2021-12-17)<br>entire document | 1-10 |
| A | CN 218009422 U (GUANGDONG XINBAO ELECTRICAL APPLIANCES HOLDINGS CO., LTD.) 13 December 2022 (2022-12-13)<br>entire document | 1-10 |
| A | JP H09327396 A (FUAIRUDO KK) 22 December 1997 (1997-12-22)<br>entire document | 1-10 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 April 2024** | **05 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/076714** |

## C. DOCUMENTS CONSIDERED TO BE RELEVANT

| Category* | Citation of document, with indication, where appropriate, of the relevant passages | Relevant to claim No. |
|---|---|---|
| A | US 2018110369 A1 (ILLYCAFFE S.P.A. CON UNICO SOCIO) 26 April 2018 (2018-04-26) entire document | 1-10 |

Form PCT/ISA/210 (second sheet) (July 2022)

**INTERNATIONAL SEARCH REPORT**
Information on patent family members

International application No.

**PCT/CN2024/076714**

| Patent document cited in search report | | | Publication date (day/month/year) | Patent family member(s) | | | Publication date (day/month/year) |
|---|---|---|---|---|---|---|---|
| CN | 116019371 | A | 28 April 2023 | None | | | |
| CN | 113056221 | A | 29 June 2021 | None | | | |
| CN | 110301838 | A | 08 October 2019 | None | | | |
| CN | 113811233 | A | 17 December 2021 | None | | | |
| CN | 218009422 | U | 13 December 2022 | None | | | |
| JP | H09327396 | A | 22 December 1997 | None | | | |
| US | 2018110369 | A1 | 26 April 2018 | US | 10729284 | B2 | 04 August 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023101466794